# EUROPEAN PATENT SPECIFICATION

(11) **EP 4 587 252 B1**
(45) Date of publication and mention of the grant of the patent: **02.12.2026**
(21) Application number: 23786313.9
(22) Date of filing: 11.09.2023
(51) Int. Cl.: B29C 48/325, B29C 49/04

(54) **DIE GROUP OF TUBULAR PARISON FORMING HEADS WITH MEANS FOR ADJUSTING CENTRING OF THE DIE AXIS**
MATRIZENGRUPPE VON RÖHRENFÖRMIGEN VORFORMLINGFORMKÖPFEN MIT MITTELN ZUR EINSTELLUNG DER ZENTRIERUNG DER MATRIZENACHSE
GROUPE DE MATRICES DE TÊTES DE FORMAGE DE PARAISON TUBULAIRE DOTÉ DE MOYENS D'AJUSTEMENT DE CENTRAGE DE L'AXE DE MATRICE

(30) Priority: 13.09.2022 IT 202200018741
(43) Date of publication of application: 23.07.2025
(73) Proprietor: Magic MP S.p.A., 20841 Carate Brianza (MB) (IT)
(72) Inventor: GIACOBBE, Ferruccio, 20841 Carate Brianza (MB) (IT)
(74) Representative: Raimondi, Margherita
(86) International application number: PCT/IB2023/058994
(87) International publication number: WO 2024/057181

(56) References cited:
- EP-B1- 0 873 845
- EP-B1- 3 078 477
- DE-C2- 19 537 132
- US-A1- 2005 276 876

## Description

The present invention relates to a die group for a forming head for forming tubular parisons made of plastic material and a tubular parison forming head provided with such a die group.

In the technical sector of packaging liquid products and the like, it is known that there exists the need to produce plastic material containers suitable for this purpose.

It is also known that said containers are formed in suitable blow-moulding machines provided with forming heads which are designed to dispense through a bottom dispensing mouth a respective tube of extruded plastic material - known as a "parison" - along a vertical dispensing axis.

Each forming head is arranged above an associated blowing seat of a blowing mould, formed by two half-moulds displaceable between two different opening/closing positions for capturing/releasing the dispensed parisons which are blown inside the closed mould.

It is also known that each parison forming head comprises a supply group with a vertical-axis distribution chamber which supplies the plastic material to the bottom dispensing mouth.

The dispensing mouth is in turn formed by a female die which has, coaxially inserted inside it, an elongated male element with a vertical axis so that, by varying the relative position in the vertical direction between the female die and the male element, it is possible to adjust the opening of the dispensing mouth and therefore the thickness profile of the parison being dispensed.

The coupling bewteen the female die and the male element is therefore generally such as to allow a relative displacement of the female die and the male element in the vertical direction so as to perform said adjustment of the thickness of the parison.

In this context, it is known that the female die is typically formed by a generally cylindrical matrix with an internal vertical-axis cavity which is coupled with the distribution duct of the supply group and with the male element so as to be coaxial with the vertical axis of the distribution chamber, with the axis of the male element and therefore with the dispensing axis of the forming head.

It is therefore of fundamental importance to couple the die with the forming group correctly centred so as to ensure perfect coaxial alignment between the vertical axis of the head and the vertical die axis.

Incorrect centring of the die with respect to the dispensing axis of the forming head in fact results in undesirable imperfections in the dispensed parison and therefore in the blown plastic container.

It is however known that the centring of the die is not always ideal for obtaining the maximum quality of the parison, in particular owing to imprecisions in the mechanical machining of the various component parts which are not perfectly centred during assembly.

In addition, it may happen that, during forming of the parisons, the material flows in a non-uniform manner through the dispensing mouth and it therefore becomes necessary to move the die in order to compensate for the non-uniform distribution.

Manual systems for adjusting the centring of the die are known, these however require complicated manual adjustments with stoppage of the machine and are subject to human error during the fine adjustment.

Example of solutions according to the prior art and disclosing a die group according to the preamble of claim 1 are described and illustrated into EP 0873 845 B1, EP 3 078 477 B1, US 2005/276876 A1, DE 195 37 132 C2.

The technical problem which is posed therefore is that of providing a die group for parison forming heads of blow-moulding machines which solves or at least partially overcomes the said problems of the prior art.

A particular object of the present invention is to obtain a precise centring of the female die with respect to the vertical dispensing axis of the forming head, which can be easily and rapidly adjusted.

These results are obtained according to the present invention by a die group for a forming head for forming a tubular parison made of plastic material according to the features of Claim 1.

The die group therefore comprises a female die, which defines an internal through-cavity with a vertical die axis; a female die holder element, rigidly connected to the female die; a housing body which has an upper through-hole which defines a vertical reference axis for coupling with a distribution duct of the forming head, said housing body arranged and configured to support the female die holder element allowing relative movement thereof in a longitudinal/transverse plane orthogonal to the vertical reference axis and parallel to a longitudinal direction and to a transverse direction orthogonal to each other and to the vertical reference axis; a first electric driving actuator, supported on the housing body and configured to rotationally drive a first output element, the first output element being coupled with the housing body and with the female die holder element by means of a first transmission mechanism such that the rotational movement of the output element moves the female die holder element in the longitudinal/transverse plane with respect to the housing body, in accordance with a first isometric transformation; a second electric driving actuator, supported on the housing body and designed to rotationally drive a second output element which is coupled with the housing body and with the female die holder element by means of a second transmission mechanism, such that rotational movement of the output element moves the female die holder element in the longitudinal/transverse plane with respect to the housing body, in accordance with a second isometric transformation.

In this way rotational driving of the first output element and/or the second output element by means of the respective first or second electric actuator easily and precisely adjusts the position of the vertical die axis with respect to the vertical reference axis in the longitudinal/transverse plane, and therefore the centring of the die with respect to the distribution duct of the forming head.

Preferred embodiments are described in the dependent claims which are fully cited herein.

The present invention relates furthermore to a forming head for forming a tubular parison according to Claim 12, which also allows precise adjustment of the thickness profile of the dispensed parison.

Further details may be obtained from the following description of a nonlimiting example of embodiment of the subject of the present invention provided with reference to the attached drawings in which:
Figure 1: is a schematic, perspective, exploded view of a die group according to the present invention, situated underneath the end part of a distribution chamber of the forming head and a male element, designed to be coupled to the female element;
Figure 2: is a perspective view of the die group according to Figure 1 in the assembled condition, with an end distribution duct coaxially inserted inside the die group;
Figure 3: shows a perspective view of the group according to Fig. 2 in the partially assembled condition;
Figure 4: shows an isometric view, from above, of the die group according to Figure 2;
Figure 5: shows an isometric view, from below, of the die group according to Figure 4, with the bottom closing plate removed;
Figure 6: shows a schematic cross-sectional view along a vertical plane passing along the cross-sectional line C-C of Figure 4;
Figure 7: shows a schematic cross-sectional view along a vertical plane passing along the cross-sectional line E-E of Figure 4;
Figure 8: shows a schematic cross-sectional view along a vertical plane passing along the cross-sectional line B-B of Figure 4;
Figure 9: shows a schematic cross-sectional view along a vertical plane passing along the cross-sectional line D-D of Figure 4;
Figure 10: shows a schematic cross-sectional view along a vertical plane passing along the cross-sectional line F-F of Figure 8;
Figure 11: is an isometric diagram of the movement pattern of the plate and the die axis in the longitudinal transverse plane;
Figure 12: is a perspective view of a parison forming head with a die group according to the present invention;
Figure 13: is a schematic cross-sectional view, along a vertical plane, of the head according to Fig. 12, in the closed condition of the bottom parison dispensing mouth;
Figure 14: is a vertically sectioned schematic view of the forming head in the maximum opening condition of the bottom mouth.

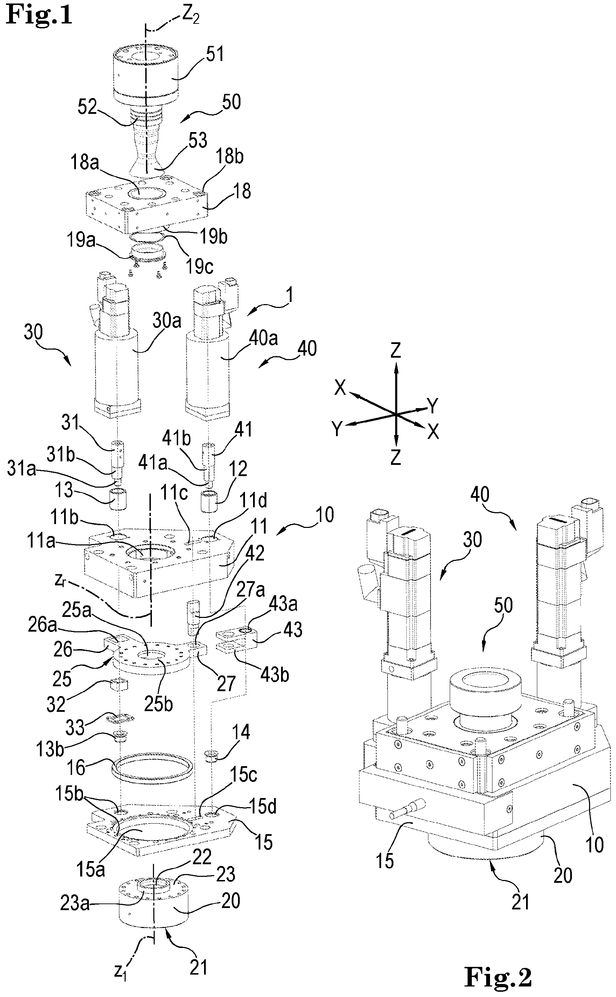

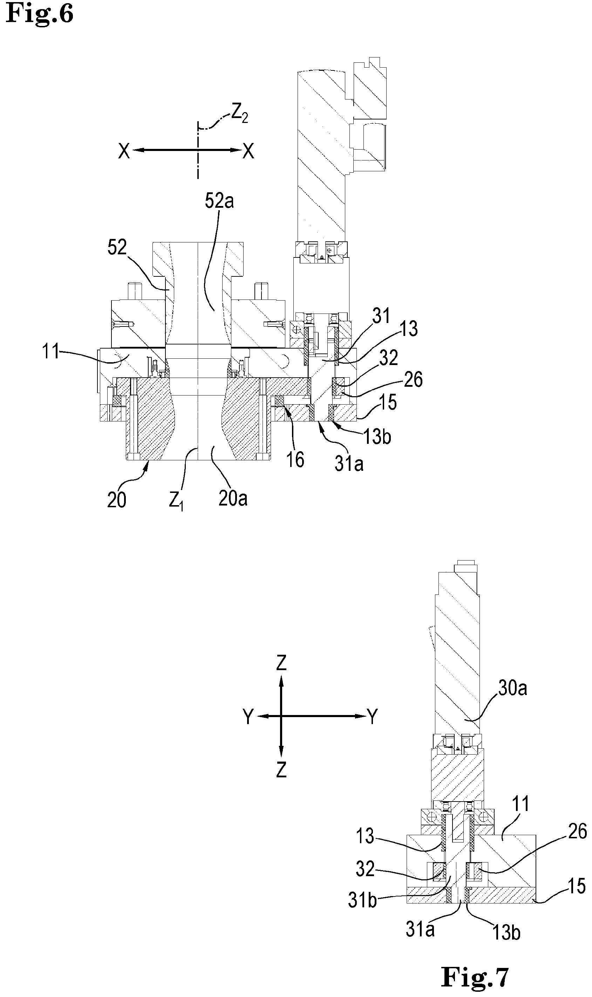

Assuming for the sake of easier description and without a limiting meaning a set of three reference axes respectively extending in a vertical direction Z-Z, parallel to a vertical die axis and a vertical dispensing axis of a parison forming head, longitudinal direction X-X widthwise of the die group, orthogonal to the vertical direction Z-Z, and transverse direction Y-Y depthwise of the group and orthogonal to the other two directions, as well as a top part and a bottom part, opposite each other in the vertical direction Z-Z, Figure 1 schematically shows the bottom end part 50 of a supply group of a parison forming head, which has a distribution chamber 51 which supplies a duct 52a (Fig. 6) with a vertical axis z2 of a coupling bush 52, which has, coaxially inserted inside it, a male element 52; according to conventional technology, the bush 52 is designed for coaxial coupling with the die group 1 so that the duct 52a is coaxial with the die and that the male element 53, inserted coaxially inside the die group 1, forms therewith a bottom parison dispensing mouth.

With reference to Figs. 1-5, the depicted preferred example of a die group 1 according to the invention comprises a female die matrix 20, which defines an internal through-cavity 20a (Fig. 6) with a vertical central axis z1. The female die 20 may generally be in the form of a cylindrical body 20 with said through-cavity 20a extending between a bottom mouth 21 and a top opening 22. The top end of the cylindrical body 20 is, in the example shown, partially closed by an annular plate 23 provided with a coaxial collar 23a projecting in the vertical direction towards the top part, so as to define said top opening 22.

A die holder element 25 is rigidly connected to the female die 20. In greater detail, this element is preferably in the form of a plate 25 extending in a longitudinal/transverse plane and with a through-hole 25a in the vertical direction Z-Z.

In the preferred example shown, the plate 25 comprises: an annular plate 25b, which has, arranged at the centre thereof, said through-hole 25a, a first radial extension 26 projecting in the longitudinal direction X-X and a second radial extension 27 projecting in the transverse direction Y-Y.

The first radial extension 26 comprises a rectangular hole 26a passing through in the vertical direction. The second radial extension 27 has a circular hole 27a with a vertical axis.

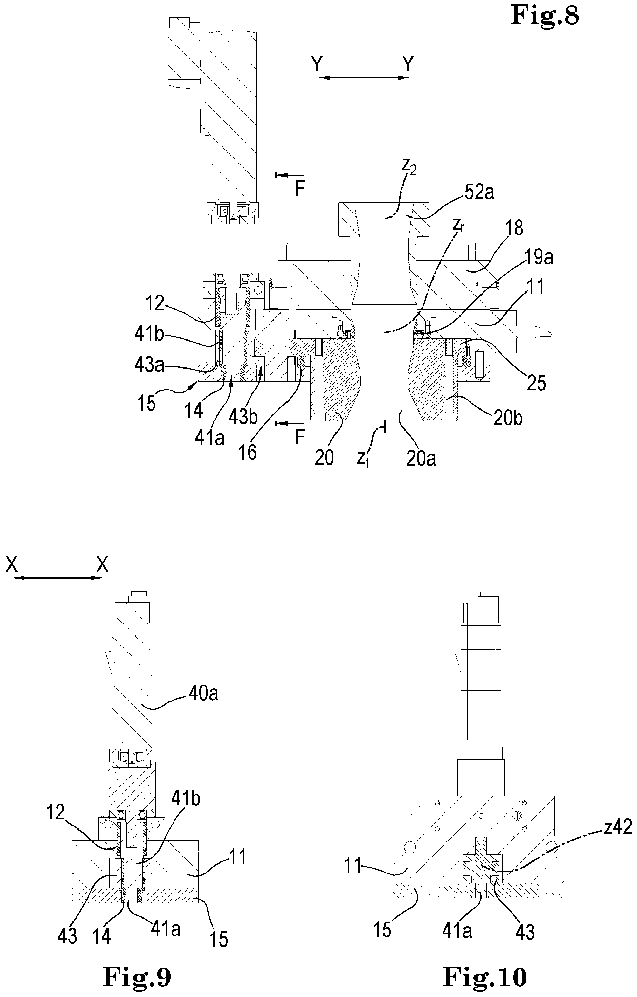

The plate 25 is designed to be coaxially coupled with the female die 20 by inserting the collar 23a inside the through-hole 25a of the plate until it makes contact with the annular plate 25b and the upper surface 23 of the female die 20; the plate 25 may then be fastened to the female die matrix 20 by means of fixing means such as screws 20b (Fig. 8) passing in the vertical direction through corresponding holes in the annular plate 23 of the die 20 and designed to engage inside respective female-thread holes of the plate 25.

As will emerge more clearly below, once coupled together, the die 20 and the die holder element 25 are designed to move integrally in a longitudinal/transverse plane parallel to the longitudinal direction and transverse direction.

A housing body 10 is arranged and configured to support the die holder element 25, allowing the relative movement thereof in the longitudinal/transverse plane X-Y.

In particular, the housing body 10 may comprise an upper casing 11 and a lower closing plate 15 which are designed to be fastened together to define an internal housing volume for the die holder plate 25.

The bottom closing plate 15 has a vertical-axis through-hole 15a with a diameter greater than the outer diameter of the die matrix 20 such as to allow the coaxial insertion of the said matrix inside the hole 15a with the possibility of moving in the longitudinal and transverse direction. The upper surface of the plate 15 has, formed therein, a recessed annular seat 15b which surrounds the through-hole 15a and is designed to house a sliding friction ring 16 which facilitates the sliding movement of the plate 25 on the closing plate 15.

The plate 15 also has a circular hole 15b passing through in the vertical direction and arranged opposite the rectangular hole 26a of the longitudinal extension 26 of the plate 25 and a through-slot 15c extending in the transverse direction Y-Y in correspondence of the transverse extension 27 of the plate 25. A vertical-axis through-hole 15d aligned in the transverse direction with the through-slot 15c is also arranged in an external position in the transverse direction Y-Y of the through-slot 15c.

The casing 11 of the housing body has an upper plate with a form generally corresponding to that of the lower plate 15, and perimetral vertical walls which define the housing volume.

The upper plate of the casing has a vertical-axis through-hole 11a, with a diameter smaller than the diameter of the hole 15a in the closing plate 15 with which it is preferably coaxial.

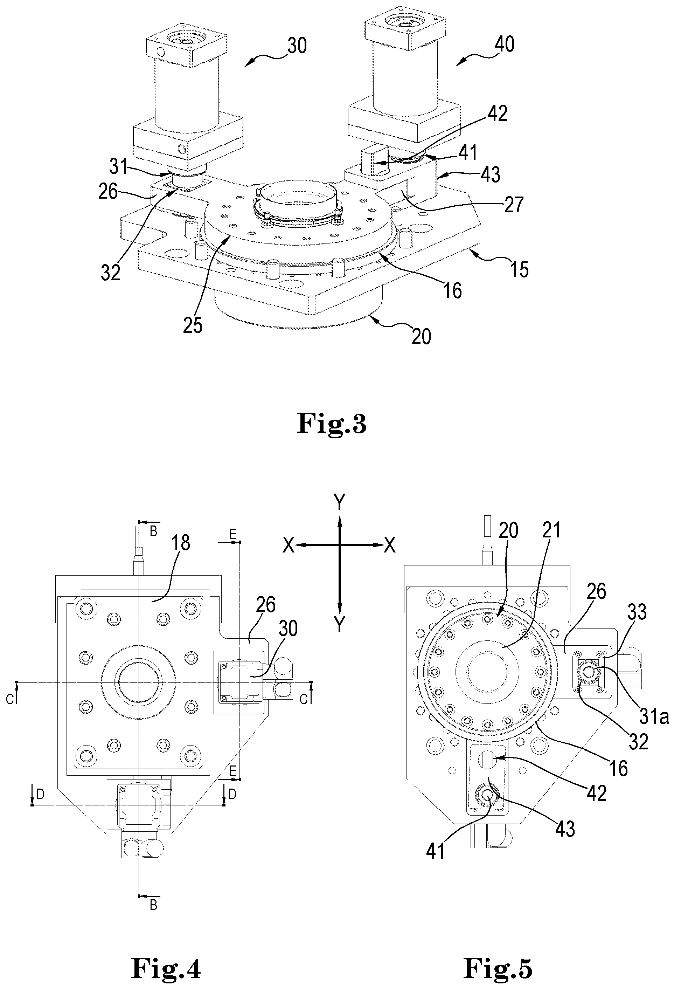

A sealing assembly is inserted in the bottom end of the hole 11a and configured to maintain the seal between the female die holder plate 25 and upper plate of the casing 11, when there is a variation in their relative position. For example, the sealing assembly may include a lower bush 19a in contact with the plate 25, an upper bush 19b fixed to the housing body 10 and pressing means 19c arranged between the two bushes so as to maintain the seal between the lower bush 19a and the plate 25 (Figs. 3,8). The housing body 10 also comprises an upper block 18 for coupling with the forming head, which has a central hole 18a with a vertical axis zr. The block 18 is designed to be rigidly fixed to the upper plate of the casing 11, for example using fixing screws (not shown), so that the axes of the hole 18a and the hole 11a coincide, forming an upper hole 18a,11a in the housing body 10. The coupling block 18 and upper plate 11 could also be formed as one piece, but the two-piece configuration is easier to assemble.

The hole 18a and/or the hole 11a has/have dimensions such as to allow the coaxial insertion (Figs. 2, 6-8) of the coupling bush 52 which has inside it the male element 50 (not shown in Figs. 6-8).

The upper hole 18a,11a therefore defines a vertical reference axis zr for coupling the die group 1 with the forming head which, once coupling has been performed, will coincide with the axis z2 of the duct 52a for distributing the material from the supply group to the die 1.

The upper block 18 is also provided with perimetral holes 18b for coupling by means of fastening means to a structural part of the forming head, using methods which will be described in greater detail below.

On the upper plate, the casing 11 also has:
-- a circular hole 11b, passing through in the vertical direction, arranged in correspondence of the rectangular hole 26a in the longitudinal radial extension 26 of the plate 25 and coaxial with the hole 15b of the closing plate 15;
-- a through-slot 11c, extending in the transverse direction Y-Y in correspondence of the through-slot 15c of the plate 15 and therefore of the transverse radial extension 27 of the plate 25;
-- a second, circular, vertical-axis hole 11d arranged in an external position in the transverse direction Y-Y with respect to the through-slot 11c and coaxially aligned with the through-hole 15d of the plate 15.

A first electric driving actuator 30 is mounted on the housing body 10 and has an output element 31 rotationally driven about a respective vertical axis. The output element 31 is coupled to the housing body 10 and to the die holder plate 25 by means of a first transmission mechanism, described in greater detail below, designed to move the plate 25 with respect to the housing 10 in the longitudinal/transverse plane X-Y orthogonal to the vertical reference axis zr.

The electric driving actuator 30 may preferably comprise an electric motor 30a with encoder and vertical-axis gearmotor which drives the output element 31, in particular consisting of a vertical shaft 31 with an eccentric pin 31b. The bottom end 31a of the eccentric shaft 31, in the example shown, is provided with a coaxial pin 31 coaxial with the vertical axis of the shaft 31. The shaft 31 is inserted through a bush 13 fixed inside the hole 11b of the casing 11.

The eccentric pin 31b of the shaft 31 is housed inside the through-hole of a parallelepiped lining block 32 which has external dimensions with a transverse dimension smaller than the transverse dimension of the rectangular hole 26a of the plate 25.

The lining block 32 is housed inside the rectangular hole 26a of the die holder plate 25. The lining block 32 is constrained to the die-holder plate 25 along the longitudinal direction X-X, but is free to slide with respect thereto in the transverse direction Y-Y inside the rectangular hole 26a (Fig. 7) between two opposite end-of-travel stops.

A rectangular plate 33 is fixed underneath the longitudinal extension 26 so as to keep the lining block 32 inside the hole 26a of the plate 25 and has a through-cavity for allowing the passage of the shaft 31, the eccentric pin 31b of which rotates inside the lining block 32.

The coaxial pin 31a at the bottom end of the shaft 31 is in turn inserted inside a bush 13b housed inside the hole 15b of the longitudinal extension of the plate 15, constraining the eccentric shaft 31 to the plate 15 with the possibility to rotate.

The preferred transmission mechanism therefore involves the lining block 32 coupled to the longitudinal radial extension 26 of the plate 25, the said longitudinal extension 26 with rectangular hole 26a and the holes 15b, 11b with bush of the housing body 10.

A second electric driving actuator 40 is mounted on the housing body 10 and has an output element 41 designed to be rotationally driven by the actuator 40 in both senses of rotation.

The output element 41 is coupled to the housing body 10 and to the die holder plate 25 by means of a respective transmission mechanism so that rotational movement of the output element 41 actuates the plate 25 with a rototranslational movement with respect to the housing body 10 in the transverse longitudinal plane X-Y in order to adjust a position of the female die 20 and therefore of the die axis z1 with respect to the reference axis zr of the housing body 10.

The electric driving actuator 40 may preferably comprise an electric motor 40a with encoder and vertical-axis gearmotor which drives the output element, in particular consisting of a vertical-axis shaft 31 with an eccentric pin 41b and a bottom end pin 41a coaxial with the axis of the shaft 41.

The shaft 41 is inserted inside a bush 12 fixed inside the hole 11d of the casing 11.

The coaxial pin 41a at the bottom end of the shaft 41 is in turn inserted inside a bush 14 housed inside the hole 15d of the longitudinal extension of the closing plate 15, constraining the eccentric shaft to the plate 15 with the possibility to rotate.

The second transmission mechanism is preferably a linkage and crank mechanism comprising a linkage 43, in the preferred example comprising a linkage head with a vertical-axis circular hole 43a arranged in an external position in the transverse direction Y-Y and designed to receive the eccentric pin 41b of the eccentric shaft 41 which acts as a crank of the mechanism.

The linkage 43 has a fork-shaped foot 43b with vertical-axis through holes.

The transverse extension 27 of the die-holder plate 25 is inserted inside the linkage foot 43b to which it is fastened by means of a pin 42 inserted inside the holes of the fork 43b and inside the hole 27a of the transverse extension, so that the die-holder plate 25 is forced to rotate about the pin 42 (Figs. 8, 10).

The pin 42 is constrained to slide linearly in the transverse direction Y-Y along the two through-slots 11c, 15c respectively formed in the casing 11 and in the closing plate 15 of the housing body 10. In greater detail, the pin 42 has an upper slider designed to be inserted and slide inside the transverse through-slot 11c of the casing 11 and a lower slider designed to be inserted and slid inside the through-slot 15c of the closing plate 15.

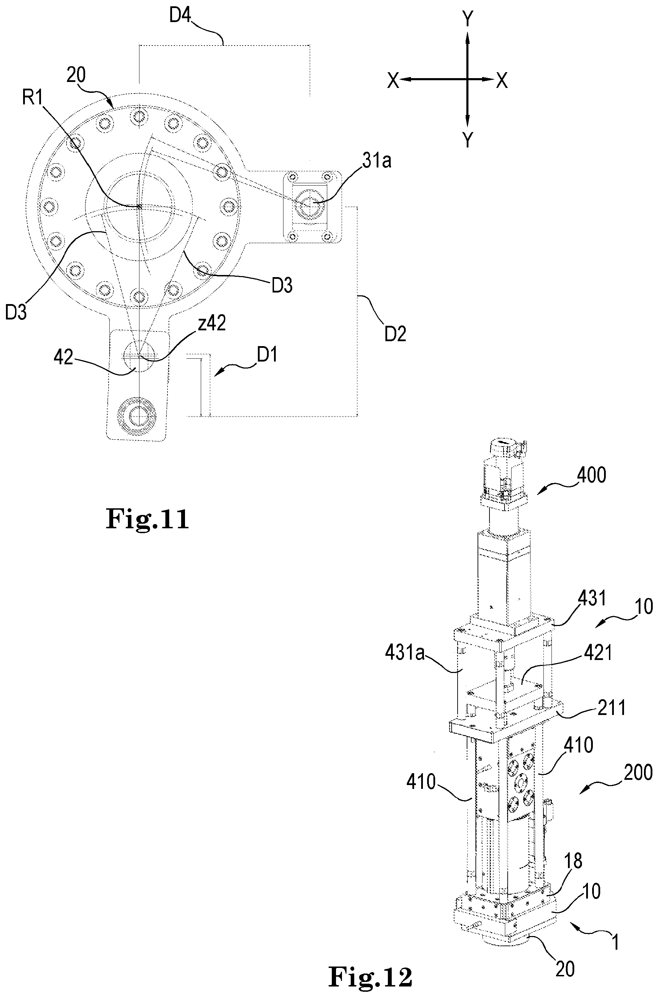

As shown in Fig. 11, with this configuration, in order to adjust the centring of the die axis z1 with respect to the reference axis zr of the housing body, the position of the die holder plate 25 and therefore of the axis z1 of the die may be determined by the shaft 41 with cam 41a which is connected to the pin 42 and therefore to the plate 25 by means of the linkage 43 and is forced to rotate in the linkage 43, in the bush 13 for the coaxial pin 31a and in the bush 13b (which are fixed respectively to the closing plate 15 and to the casing 11 of the housing body).

The die holder plate 25 is in turn constrained so as to rotate about the pin 42, which pin 42 is constrained to slide linearly in the transverse direction Y-Y along the two slots 11c, 15c of the housing body 10.

The position D1 along the axis Y-Y of linear sliding pin 42 and therefore of the axis of rotation of the die holder plate 25 is determined by the linkage 43, which defines the distance of the pin 42 from the eccentric pin 41b of the shaft 41.

A rotation of the shaft 41 driven by the electric actuator 40 therefore causes linear sliding of the sliding pin 42 inside the transverse through-slots and therefore a rototranslation of the die holder plate 25 in the X-Y plane.

As shown in Fig. 11, the rotational component of the rototranslational movement of the plate occurs about the axis of the shaft 31 of the first output element and may therefore vary depending on the position of the said eccentric shaft 31 inside the rectangular hole 26 of the plate 25.

The distance D2 between the axis of rotation of the shaft 31 and the axis of rotation of the shaft 41 remains in fact fixed. The distance D4 between the axis of the shaft 31 and reference axis zr is also constant.

Operation of the first shaft 31 with eccentric pin 31a results in rotation, by means of the first transmission mechanism, of the female die holder plate 25 about the axis z42 of the pin 42 inserted in the linkage foot.

In greater detail, the shaft 31, rotating in both senses of rotation on the bush 13b by means of the end pin 31a and on the bush 13 (which are rigidly joined with the closing plate 15 and the casing 11 of the housing body, respectively), actuates the sliding block 32 with its eccentric pin 31b (Fig. 6), forcing it to slide inside the rectangular hole 26a between two end-of-travel positions.

Sliding of the block 32 rotationally drives the plate 25 about the axis z42 of the linkage foot 43b which is fixed in the given position by means of the second actuator 40 and the respective actuating mechanism.

The axis z42 of the pin 42 is at a constant distance D3 from the axis z1 of the die.

In other words, as shown in Fig. 1, the axis z1 of the die therefore moves along a circumference with a constant radius equal to the distance D3 between the axis z42 of the pin 42 inserted in the linkage foot and the die axis z1.

It is therefore clear how the first electric driving actuator 30 has the rotating outlet element 31 coupled to the housing body 10 and to the female die holder element 25 by means of the first transmission mechanism in such a way that the rotational movement of the output element 31 moves the female die holder element 25 in the longitudinal/transverse plane with respect to the housing body 10, in accordance with a first isometric transformation which, in the example, is a pure rotation about the axis of the linkage foot 43b of the second transmission mechanism.

It is also clear that the second driving actuator 40 has the second output element 41 coupled to the housing body 10 and to the die holder element 25 by means of the respective transmission mechanism 42,43 so that the rotational movement of the output element 41 moves the die holder plate 25 with respect to the housing body 10 in the longitudinal/transverse plane, in accordance with a second isometric transformation, which in the example is a rototranslation.

With the die group according to the present invention it is therefore possible to adjust precisely the position of the female die and therefore the vertical axis z1 of the die with respect to the housing 10 and therefore the vertical reference axis zr, by rotationally actuating the first output element 31 and/or the second output element 41 by means of the first or second electric actuator so as to obtain the desired isometric movement of the plate 25 in the longitudinal/transverse plane.

Fig. 11 shows the region R1 of the longitudinal/transverse plane inside which the position of the die axis z1 may be adjusted by means of the two mechanisms of the preferred example shown.

Since the reference axis zr always has a known and fixed relationship with the axis z2 of the distribution duct 52a of the forming head, the adjustment is able to ensure the desired alignment between die 20, distribution duct 52a and male element 53 as well as the maximum quality of the dispensed parison.

The solution described for adjustment of the position of the plate 25 in the longitudinal/transverse plane X-Y could be realized in a different manner. For example, the first transmission mechanism 32,33,15,15b could be arranged so as to act on the transverse extension 27 of the plate 25 and the second transmission mechanism 12,42,43,14 could be arranged to act the longitudinal extension 26, with a corresponding reorientation of the housing body 10 and the die holder plate 25.

It is also possible to imagine different combinations of transmission mechanisms, for example designed to operate in accordance with different rototranslation transformations, such as pure translations along the X-X and Y-Y axes, or different combinations of rotational and translational movements suitable for adjusting the position of the plate 25 and therefore of the die and die axis z1 in the plane X-Y.

In addition, the invention is not limited to radial extensions 26,27 arranged on orthogonal axes, different arrangements being possible depending on the type of isometric transformations chosen and other possible design requirements.

In particularly preferred embodiments, either one of the first radial extension 26 and the second radial extension 27 is arranged so as to project radially parallel to the longitudinal axis X-X or to the transverse axis Y-Y, while the other radial extension 27,26 may be arranged so as to project radially from the annular plate parallel to an axis oriented at an angle of between 90° e 270° with respect to said longitudinal axis X-X or transverse axis Y-Y. In other words, the radial extensions 26, 27 (and therefore the output elements of the actuators) may be arranged along orthogonal axes (X-X, Y-Y) or aligned along the same axis (X-X or Y-Y) on opposite sides of the annular plate) and therefore at an angular distance of 180°) or at a different angular distance in the plane X-Y of between 90° and 270°.

During use, the die group will be coupled to a forming head and the initial adjustment of the centring may be for example performed by means of a corresponding electronic control unit which controls operation of the actuators 30,40. The alignment may be for example checked manually (visually during the adjustment cycle) or automatically by means of suitable sensors and/or feedback devices.

Figure 12 shows a preferred example of embodiment of a forming head 10 in which the die group 1 is mounted at the bottom end thereof where the parison is dispensed.

The head 10 is mounted on a flange 211 which, during use, is fixed in the vertical direction Z-Z, for example to a support plate (not shown) mounted on the frame of the blow-moulding machine.

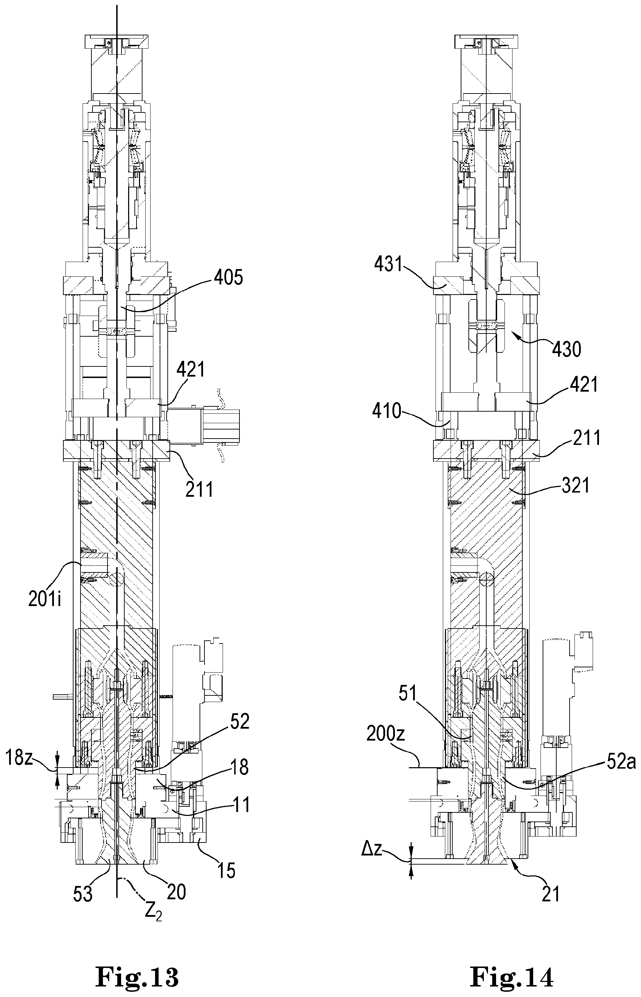

The forming head 10 has a vertical axis z2 (Fig. 13) and a die group 1 for dispensing a parison through a bottom dispensing mouth 21.

A supply group 200 is connected to the die group 1 for supplying of the plastic material to be dispensed in the form of a parison through the die group 1.

The supply group 200 of the head 10 comprises (Fig. 13) an inlet 201i for the material to be dispensed, connected to a vertical-axis distribution chamber 51 (Fig. 14) designed to supply the duct 52a of the coupling bush 52 coaxially inserted inside the upper hole 18a of the die group 1.

The male element 53 is coaxially coupled to the coupling bush 52 and is coaxially inserted inside the distribution duct 52a and inside the female die 20 so as to form the bottom dispensing mouth of the parison. As can be seen more clearly in Figs. 13 and 14, the distribution chamber 51 is displaceable integrally with the flange 211 by means of a block 321 which comprises said inlet 201i for the plastic material.

The die group 1 is actuated in accordance with the above description and is not described in detail; for the purposes of description it is assumed that the centring of the die 20 with respect to the axis z2 of the distribution duct 52a and of the male element 53 has already been performed.

The male element 53 is coaxially inserted inside the die 20, so that by varying a relative position in the vertical direction of the die 20 and male element 53 it is possible to adjust the opening of the dispensing mouth 21 and therefore the thickness of the dispensed parison.

An electric actuator 400 designed to adjust the thickness of the parison dispensed by the head 10 is supported at the top by the support flange 211 and is designed to displaceably actuate in the vertical direction Z-Z one of the male element 53 and the die 20 in order to vary the opening of the dispensing mouth, for example by means of a transmission chain 430,410 acting on the housing body 10 of the die group 1 (or on the male element 53) which transforms a rotational movement of the shaft of the actuator 400 into a translation in the vertical direction Z-Z of the housing body 10 and therefore the female die 20 (or male element), resulting in greater/lesser opening of the dispensing mouth in order to determine variations in thickness in the body of the dispensed parison and therefore of the final container.

In the preferred configuration shown, the male element 53 is fixed to the supply group 200, while the die group 1 is movable in the vertical direction with respect to the distribution chamber 51 and the male element 53 between an upper end-of-travel position (Fig. 13) corresponding to a minimum opening (closed) configuration of the mouth and a lower end-of-travel position, corresponding to a maximum opening configuration Δz (Fig. 14) of the dispensing mouth 21.

In greater detail, the coupling block 18 is rigidly connected to the bottom end of the vertical columns 410 which, passing through the flange 211, have a top end fixed to an actuating plate 421.

The actuating plate 421 is moved in the vertical direction Z-Z with respect to the flange 211 by the actuator 400, which is fixed to an upper plate 431 constrained by means of respective uprights 431 to the flange 211 with which it is therefore integral in the vertical direction.

The output shaft 405 of the actuator 400 is connected to the transmission mechanism 430 which transforms a rotational movement of the shaft 405 into a translational movement of the plate 421 in the vertical direction with respect to the plate 431 and therefore the flange 211. The mechanism 430 may be of any known type, for example of the screw/female thread type.

The translational movement of the plate 421 in the vertical direction moves the housing body 10 by means of the columns 10 with respect to the plate 411 and therefore the supply group 200 with coupling bush 52, which is fixed to the flange 211.

As can be seen in Figure 13, in the lowered position of the die group 1, the coupling block 18 is arranged at a maximum distance 18z from a bottom base plane 200z of the supply group 200 (Fig. 14), while the coupling bush 52 ensures the sealed coupling of the die group 1 with the housing body 10. Figure 14 shows an upper end-of-travel position of the die group 1 which, in the preferred example, is in contact with the bottom base 200z, resulting in the male element 53 being extracted from the die 20 by a maximum vertical distance Δz.

It will be clear to the person skilled in the art that different configurations are possible, wherein for example the housing body 10 is fixed to the distribution group 200 and the male element is coaxially actuated displaceably in the vertical direction by means of a transmission mechanism inserted inside a central coaxial cavity of the supply group 200.

It is therefore clear how with the actuator 400 for vertical translation operation of the die or the male element is able to obtain easy adjustment of the opening of the dispensing mouth and therefore of the parison thickness.

Although described in connection with a number of embodiments and a number of preferred examples of implementation of the invention, it is understood that the scope of protection of the present patent is determined solely by the claims below.

## Claims

1. Die group (1) for a forming head (10) for forming a tubular parison made of plastic material, comprising:
- a female die (20), which defines an internal through-cavity (20a) with a vertical die axis (z1);
- a female die holder element (25), rigidly connected to the female die (20);
- a housing body (10) which has an upper through-hole which defines a vertical reference axis (zr) for coupling with a distribution duct (52a) of the forming head, said housing body (10) arranged and configured to support the female die holder element (25) allowing relative movement thereof in a longitudinal/transverse plane orthogonal to the vertical reference axis (zr) and parallel to a longitudinal direction (X-X) and to a transverse direction (Y-Y) orthogonal to each other and to the vertical reference axis (zr);
- a first electric driving actuator (30), supported on the housing body (10) and configured to rotationally drive a first output element (31); the first output element (31) being coupled with the housing body (10) and with the female die holder element (25) by means of a first transmission mechanism such that the rotational movement of the output element (31) moves the female die holder element (25) in the longitudinal/transverse plane with respect to the housing body (10), in accordance with a first isometric transformation;
- a second electric driving actuator (40), supported on the housing body (10) and designed to rotationally drive a second output element (41) which is coupled with the housing body (10) and with the female die holder element (25) by means of a second transmission mechanism, such that the rotational movement of the second output element (41) moves the female die holder element (25) in the longitudinal/transverse plane with respect to the housing body (10), in accordance with a second isometric transformation,
whereby rotational driving of the first output element (31) and/or the second output element (41) by means of the respective first or second electric actuators (30,40) adjusts the position of the vertical die axis (z1) with respect to the vertical reference axis (zr) in the longitudinal/transverse plane,
**characterized in that**
the female die holder element is a plate (25) extending in a longitudinal/transverse plane and comprising an annular plate (25b) with a vertical-axis through-hole (25a), a first extension (26) projecting radially from the annular plate for coupling with the first output element (31) and a second extension (27) projecting radially from the annular plate for coupling with the second output element (41); wherein, preferably, the first extension projects radially in the longitudinal direction (X-X) and/or the second extension (27)

2. Die group according to Claim 1, wherein the first isometric transformation and/or the second isometric transformation is a rotation or a rototranslation of the female die holder element (25) in the longitudinal/transverse plane with respect to the housing body (10).

3. Die group according to Claim 2, wherein the first isometric transformation is a rotation of the female die holder element about a pin (42) and/or wherein the second isometric transformation is a rototranslation of the female die holder element (25) in the longitudinal/transverse plane, wherein preferably said pin (42) forms part of the second transmission mechanism and/or is displaced linearly with respect to the housing body when said second output element (41) is rotationally driven.

4. Die group according to one of the preceding claims, wherein at least one of the first and second transmission mechanisms is a linkage (43) and crank mechanism.

5. Die group according to one of the preceding claims, wherein said first output element and/or said second output element is an eccentric shaft (31;41) coupled to the housing body so as to rotate with respect thereto about a fixed vertical axis and with an eccentric part (31b;41b) acting on the female die holder element (25).

6. Die group according to one of the preceding claims, wherein the first radial extension (26) comprises a rectangular hole (26a) passing through in the vertical direction; wherein the first transmission mechanism includes a parallelepiped lining block (32) housed inside the rectangular hole (26a) of the first radial extension (26) of the die-holder plate (25) so as to be fixed in the direction of the short side of the rectangular hole (26a), but free to slide inside the rectangular hole (26a) in the direction of the long side of the rectangular hole (26a) between two opposite end-of-travel positions; and wherein an eccentric pin (31b) of the first output element (31) is housed inside a vertical through-hole of the parallelepiped lining block (32).

7. Die group according to Claim 5 or 6, wherein the second transmission mechanism includes a linkage (43) comprising a linkage head with a vertical-axis circular hole (43a) inside which an eccentric pin (41b) of the second output element (41) rotates.

8. Die group according to Claim 7, wherein the linkage (43) has a foot (43b) and the second radial extension (27) of the die holder plate (25) is fastened to the foot (43b) of the linkage by means of a pin (42) with a vertical axis (z42) such that the die holder plate (25) is forced to rotate about the vertical axis (z42) of the pin (42);
and wherein the pin (42) is coupled with the housing body (10) so as to be constrained to slide linearly, preferably in the transverse direction (Y-Y), with respect to the housing body (10) between two end-of-travel positions, when the second output element is rotationally driven.

9. Die group according to one of the preceding claims, wherein the housing body (10) comprises an upper plate, a lower plate (15) and vertical perimetral walls, which are joined together so as to define an internal volume for housing the female die holder element (25); and wherein the lower plate (15) has a through-hole (15a) with a vertical axis having dimensions such as to allow the coaxial insertion of the female die (20) with the possibility of movement in a longitudinal/transverse plane.

10. Die group according to one of the preceding claims, wherein an inset annular seat (15b) is formed on the upper surface of the lower plate (15), said annular seat surrounding the through-hole (15a) and housing a sliding friction ring (16) which facilitates the sliding movement of the female die holder element (25) in the longitudinal/transverse plane with respect to the housing body.

11. Die group according to one of the preceding claims, wherein the housing body (10) comprises an upper block (18) for coupling with the forming head, which is rigidly joined with the upper plate; said upper through-hole (11a, 18a) extending through the upper block (18) and the upper plate of the housing body in order to receive a male element (53) to be inserted inside the female die and to define said vertical reference axis (zr).

12. Forming head for forming a tubular parison made of plastic material for a blow-moulding machine, comprising:
- a support (211), fixed during use in the vertical direction (Z-Z);
- a supply group (200) for supplying the plastic material, rigidly connected to the support (211) and comprising a distribution duct (52a) with a vertical axis (z2);
- a die group according to one of the preceding claims, wherein the housing body (10) is coupled to the supply group (200) so that the vertical reference axis (zr) of the upper through-hole (18a, 11a) is coaxial with the vertical axis (z2) of the distribution duct (52a);
- a male element (53), coaxially coupled with the distribution duct and inserted inside the upper through-hole (18a, 11a) and inside the female die so as to define therewith a mouth (21) for dispensing the parison;
- an electric actuator (400) designed to adjust the thickness of the parison dispensed by the forming head (10), mounted on the support (211) and designed to displaceably actuate in the vertical direction (Z-Z) one of the male element (53) and the housing body of the die group (20) so as to vary the relative position in the vertical direction (Z-Z) of the male element (53) and the female die (20) in order to adjust the opening of the dispensing mouth.

13. Forming head according to the preceding claim, wherein the male element (53) is fixed to the supply group (200) and the die group (1) is movable in the vertical direction with respect to the distribution chamber (51) and the male element (53) between an upper end-of-travel position corresponding to a minimum opening configuration of the dispensing mouth and a lower end-of-travel position, corresponding to a maximum opening configuration (Δz) of the dispensing mouth (21).

14. Forming head according to Claim 12 or 13, wherein the electric actuator (400) for adjusting the thickness of the parison is connected by means of a transmission chain (430,410) to the housing body (10) of the die group (1) or to the male element (53), said transmission chain being configured to transform a rotational movement of a shaft of the actuator (400) into a displacement in the vertical direction (Z-Z) of the housing body (10) and therefore of the female die (20) or of the male element (53) with respect to the support (211).

## Patentansprüche

1. Formwerkzeuggruppe (1) für einen Formkopf (10) zum Formen eines rohrförmigen Vorformlings aus Kunststoff, umfassend:
- eine Aufnahmematrize (20), die eine innere Durchgangskavität (20a) mit einer vertikalen Matrizenachse (z1) definiert;
- ein Aufnahmematrizenhalterelement (25), das starr mit der Aufnahmematrize (20) verbunden ist;
- einen Gehäusekörper (10), der eine obere Durchgangsbohrung aufweist, welche eine vertikale Bezugsachse (zr) zur Kopplung mit einem Verteilerkanal (52a) des Formkopfes definiert, wobei der Gehäusekörper (10) so angeordnet und ausgebildet ist, dass er das Aufnahmematrizenhalterelement (25) trägt und eine relative Bewegung desselben in einer Längs-/Quer-Ebene ermöglicht, die orthogonal zur vertikalen Bezugsachse (zr) und parallel zu einer Längsrichtung (X-X) sowie zu einer Querrichtung (Y-Y) verläuft, die zueinander und zur vertikalen Bezugsachse (zr) orthogonal sind;
- einen ersten elektrischen Antriebsaktuator (30), der am Gehäusekörper (10) gelagert und so ausgebildet ist, dass er ein erstes Abtriebselement (31) in Drehung versetzt; wobei das erste Abtriebselement (31) mittels eines ersten Übertragungsmechanismus mit dem Gehäusekörper (10) und mit dem Aufnahmematrizenhalterelement (25) gekoppelt ist derart, dass die Drehbewegung des Abtriebselements (31) das Aufnahmematrizenhalterelement (25) in der Längs-/Quer-Ebene relativ zum Gehäusekörper (10) gemäß einer ersten isometrischen Transformation bewegt;
- ein zweiter elektrischer Antriebsaktuator (40), der am Gehäusekörper (10) gelagert ist und dazu ausgelegt ist, ein zweites Abtriebselement (41) drehend anzutreiben, welches mittels eines zweiten Übertragungsmechanismus mit dem Gehäusekörper (10) und mit dem Aufnahmematrizenhalterelement (25) gekoppelt ist derart, dass die Drehbewegung des zweiten Abtriebselements (41) das Aufnahmematrizenhalterelement (25) in der Längs-/Quer-Ebene relativ zum Gehäusekörper (10) gemäß einer zweiten isometrischen Transformation verschiebt, wobei Drehantrieb des ersten Abtriebselements (31) und/oder des zweiten Abtriebselements (41) mittels des jeweiligen ersten oder zweiten elektrischen Antriebsaktuators (30, 40) die Position der vertikalen Werkzeugachse (z1) relativ zur vertikalen Referenzachse (zr) in der Längs-/Quer-Ebene einstellt.
**dadurch gekennzeichnet, dass**
das aufnehmende Aufnahmematrizenhalterelement eine sich in einer Längs-/Quer-Ebene erstreckende Platte (25) ist, die eine ringförmige Platte (25b) mit einer vertikal ausgerichteten Durchgangsbohrung (25a) sowie einen ersten Fortsatz (26), der radial von der Ringplatte zur Kopplung mit dem ersten Abtriebselement (31) vorspringt, und einen zweiten Fortsatz (27) aufweist, der radial von der Ringplatte zur Kopplung mit dem zweiten Abtriebselement (41 ) vorspringt; wobei vorzugsweise der erste Vorsprung und/oder der zweite Vorsprung (27) radial in Längsrichtung (X-X) vorspringt.

2. Formwerkzeuggruppe nach Anspruch 1, wobei die erste isometrische Transformation und/oder die zweite isometrische Transformation eine Drehung oder eine Rototranslation des Aufnahmematrizenhalterelements (25) in der Längs-/Quer-Ebene relativ zum Gehäusekörper (10) ist.

3. Formwerkzeuggruppe nach Anspruch 2, wobei die erste isometrische Transformation eine Drehung des Aufnahmematrizenhalterelements um einen Stift (42) ist und/oder wobei die zweite isometrische Transformation eine Rototranslation des Aufnahmematrizenhalterelements (25) in der Längs-/Quer-Ebene ist, wobei vorzugsweise der genannte Stift (42) Teil des zweiten Übertragungsmechanismus ist und/oder linear relativ zum Gehäusekörper verschoben wird, wenn das zweite Abtriebselement (41) in Drehung versetzt wird.

4. Formwerkzeuggruppe nach einem der vorstehenden Ansprüche, wobei mindestens einer der ersten und zweiten Übertragungsmechanismen ein Gestänge- (43) und Kurbelmechanismus ist.

5. Formwerkzeuggruppe nach einem der vorstehenden Ansprüche, wobei das erste Abtriebselement und/oder das zweite Abtriebselement eine Exzenterwelle (31; 41) ist, die so mit dem Gehäusekörper gekoppelt ist, dass sie sich relativ zu diesem um eine feste vertikale Achse dreht und mit einem Exzenterabschnitt (31b; 41b) auf das Aufnahmematrizenhalterelement (25) einwirkt.

6. Formwerkzeuggruppe nach einem der vorstehenden Ansprüche, wobei der erste radiale Fortsatz (26) ein in vertikaler Richtung durchgehendes rechteckiges Loch (26a) aufweist; wobei der erste Übertragungsmechanismus einen quaderförmigen Auskleidungsblock (32) umfasst, der innerhalb des rechteckigen Lochs (26a) des ersten radialen Fortsatzes (26) der Werkzeughalterplatte (25) so untergebracht ist, dass er in Richtung der kurzen Seite der rechteckigen Öffnung (26a) fixiert ist, jedoch innerhalb der rechteckigen Öffnung (26a) in Richtung der langen Seite der rechteckigen Öffnung (26a) zwischen zwei gegenüberliegenden Endlagen frei gleiten kann; und wobei ein Exzenterstift (31 b) des ersten Abtriebselements (31) in einer vertikalen Durchgangsbohrung des quaderförmigen Auskleidungsblocks (32) aufgenommen ist.

7. Formwerkzeuggruppe nach Anspruch 5 oder 6, wobei der zweite Übertragungsmechanismus ein Gestänge (43) enthält, das einen Gestängekopf mit einer vertikal ausgerichteten kreisförmigen Bohrung (43a) umfasst, in der sich ein Exzenterstift (41b) des zweiten Abtriebselements (41) dreht.

8. Formwerkzeuggruppe nach Anspruch 7, wobei das Gestänge (43) einen Fuß (43b) aufweist, und der zweite radiale Fortsatz (27) der Werkzeughalterplatte (25) mittels eines Stifts (42) mit vertikaler Achse (z42) an dem Fuß (43b) des Gestänges befestigt ist, so dass die Werkzeughalterplatte (25) gezwungen wird, sich um die vertikale Achse (z42) des Stifts (42) zu drehen;
und wobei der Stift (42) mit dem Gehäusekörper (10) so gekoppelt ist, dass er dann, wenn das zweite Abtriebselement in Drehung versetzt wird, gezwungen ist, relativ zum Gehäusekörper (10) zwischen zwei Endlagen linear, vorzugsweise in Querrichtung (Y-Y), zu gleiten.

9. Formwerkzeuggruppe nach einem der vorstehenden Ansprüche, wobei der Gehäusekörper (10) eine obere Platte, eine untere Platte (15) und vertikale Umfangswände umfasst, die so miteinander verbunden sind, dass sie einen Innenraum zur Aufnahme des Aufnahmematrizenhalterelements (25) bilden; und wobei die untere Platte (15) eine Durchgangsbohrung (15a) mit einer vertikalen Achse aufweist, deren Abmessungen so bemessen sind, dass das koaxiale Einführen der Aufnahmematrize (20) mit der Möglichkeit einer Bewegung in einer Längs-/Quer-Ebene ermöglicht wird.

10. Formwerkzeuggruppe nach einem der vorstehenden Ansprüche, wobei an der Oberseite der unteren Platte (15) ein eingelassener ringförmiger Sitz (15b) ausgebildet ist, der die Durchgangsbohrung (15a) umgibt und einen Gleitreibungsring (16) aufnimmt, der die Gleitbewegung des Aufnahmematrizenhalterelements (25) in der Längs-/Quer-Ebene relativ zum Gehäusekörper erleichtert.

11. Formwerkzeuggruppe nach einem der vorstehenden Ansprüche, wobei der Gehäusekörper (10) einen oberen Block (18) zur Kopplung mit dem Formkopf umfasst, der fest mit der oberen Platte verbunden ist; wobei sich die obere Durchgangsbohrung (11a, 18a) durch den oberen Block (18) und die obere Platte des Gehäusekörpers erstreckt, um ein in die Aufnahmematrize einzuführendes männliches Element (53) aufzunehmen und die vertikale Bezugsachse (zr) zu definieren.

12. Formkopf zum Formen eines rohrförmigen Vorformlings aus Kunststoff für eine Blasformmaschine, umfassend:
einen Träger (211), der im Betrieb in vertikaler Richtung (Z-Z) fixiert ist;
eine Zuführgruppe (200) zur Zuführung des Kunststoffmaterials, die starr mit dem Träger (211) verbunden ist und einen Verteilerkanal (52a) mit vertikaler Achse umfasst (z2);
eine Formwerkzeuggruppe gemäß einem der vorstehenden Ansprüche, wobei der Gehäusekörper (10) so mit der Zuführgruppe (200) gekoppelt ist, dass die vertikale Bezugsachse (zr) der oberen Durchgangsbohrung (18a, 11a) koaxial zur vertikalen Achse (z2) des Verteilerkanals (52a) verläuft;
ein männliches Element (53), das koaxial mit dem Verteilerkanal verbunden ist und in das obere Durchgangsloch (18a, 11 a) sowie in die Aufnahmematrize eingeführt ist, um mit diesen eine Öffnung (21) zum Ausgeben des Vorformlings zu bilden;
einen elektrischen Aktuator (400), der dazu ausgelegt ist, die Dicke des vom Formkopf (10) abgegebenen Vorformlings einzustellen, der auf dem Träger (211) montiert ist und dazu ausgelegt ist, entweder das männliche Element (53) oder den Gehäusekörper der Formwerkzeuggruppe (20) in vertikaler Richtung (Z-Z) verschiebbar zu betätigen, um die relative Position des männlichen Elements (53) und der Aufnahmematrize (20) in vertikaler Richtung (Z-Z) zu verändern und so die Öffnung der Ausgabemündung einzustellen.

13. Formkopf nach dem vorstehenden Anspruch, wobei das männliche Element (53) an der Zuführgruppe (200) befestigt ist und die Formwerkzeuggruppe (1) in vertikaler Richtung relativ zur Verteilkammer (51) und zum männlichen Element (53) zwischen einer oberen Endlage, die einer minimalen Öffnungskonfiguration der Ausgabemündung entspricht, und einer unteren Endlage, die einer maximalen Öffnungskonfiguration (Δz) der Ausgabemündung (21) entspricht, bewegbar ist.

14. Formkopf nach Anspruch 12 oder 13, wobei der elektrische Aktuator (400) zum Einstellen der Dicke des Vorformlings über eine Übertragungskette (430, 410) mit dem Gehäusekörper (10) der Formwerkzeuggruppe (1) oder mit dem männlichen Element (53) verbunden ist, wobei die Übertragungskette so ausgebildet ist, dass sie eine Drehbewegung einer Welle des Aktuators (400) in eine Verschiebung in vertikaler Richtung (Z-Z) des Gehäusekörpers (10) und damit der Aufnahmematrize (20) oder des männlichen Elements (53) relativ zum Träger (211) umsetzt.

## Revendications

1. Groupe de matrice (1) pour une tête de formage (10) pour former une paraison tubulaire en matière plastique, comprenant :
- une matrice femelle (20), qui définit une cavité traversante interne (20a) avec un axe de matrice vertical (z1);
- un élément de support de matrice femelle (25), relié de manière rigide à la matrice femelle (20);
- un corps de boîtier (10) qui a un trou traversant supérieur qui définit un axe de référence vertical (zr) pour un couplage avec un conduit de distribution (52a) de la tête de formage, ledit corps de boîtier (10) étant agencé et configuré pour supporter l'élément de support de matrice femelle (25) permettant un mouvement relatif de celui-ci dans un plan longitudinal/transversal orthogonal à l'axe de référence vertical (zr) et parallèle à une direction longitudinale (X-X) et à une direction transversale (Y-Y) orthogonales l'une à l'autre et à l'axe de référence vertical (zr);
- un premier actionneur d'entraînement électrique (30), supporté sur le corps de boîtier (10) et configuré pour entraîner en rotation un premier élément de sortie (31); le premier élément de sortie (31) étant couplé au corps de boîtier (10) et à l'élément de support de matrice femelle (25) au moyen d'un premier mécanisme de transmission de telle sorte que le mouvement de rotation de l'élément de sortie (31) déplace l'élément de support de matrice femelle (25) dans le plan longitudinal/transversal par rapport au corps de boîtier (10), conformément à une première transformation isométrique;
- un second actionneur d'entraînement électrique (40), supporté sur le corps de boîtier (10) et conçu pour entraîner en rotation un second élément de sortie (41) qui est accouplé au corps de boîtier (10) et à l'élément de support de matrice femelle (25) au moyen d'un second mécanisme de transmission, de telle sorte que le mouvement de rotation du second élément de sortie (41) déplace l'élément de support de matrice femelle (25) dans le plan longitudinal/transversal par rapport au corps de boîtier (10), conformément à une seconde transformation isométrique, moyennant quoi l'entraînement en rotation du premier élément de sortie (31) et/ou du second élément de sortie (41) au moyen des premier ou second actionneurs électriques respectifs (30, 40) règle la position de l'axe de matrice vertical (z1) par rapport à l'axe de référence vertical (zr) dans le plan longitudinal/transversal,
**caractérisé en ce que**
l'élément de support de matrice femelle est une plaque (25) s'étendant dans un plan longitudinal/transversal et comprenant une plaque annulaire (25b) avec un trou traversant d'axe vertical (25a), une première extension (26) faisant saillie radialement à partir de la plaque annulaire pour s'accoupler avec le premier élément de sortie (31) et une seconde extension (27) faisant saillie radialement à partir de la plaque annulaire pour s'accoupler avec le second élément de sortie (41); dans lequel, de préférence, la première extension fait saillie radialement dans la direction longitudinale (X-X) et/ou la seconde extension (27).

2. Groupe de matrice selon la revendication 1, dans lequel la première transformation isométrique et/ou la deuxième transformation isométrique est/sont une rotation ou une rototranslation de l'élément de support de matrice femelle (25) dans le plan longitudinal/transversal par rapport au corps de boîtier (10).

3. Groupe de matrice selon la revendication 2, dans lequel la première transformation isométrique est une rotation de l'élément de support de matrice femelle autour d'une broche (42) et/ou dans lequel la deuxième transformation isométrique est une rototranslation de l'élément de support de matrice femelle (25) dans le plan longitudinal/transversal, dans lequel de préférence ladite broche (42) fait partie du deuxième mécanisme de transmission et/ou est déplacée linéairement par rapport au corps de boîtier lorsque ledit deuxième élément de sortie (41) est entraîné en rotation.

4. Groupe de matrice selon l'une des revendications précédentes, dans lequel au moins l'un des premier et second mécanismes de transmission est un mécanisme de liaison (43) et de manivelle.

5. Groupe de matrice selon l'une des revendications précédentes, dans lequel ledit premier élément de sortie et/ou ledit second élément de sortie est un arbre excentrique (31; 41) couplé au corps de boîtier de manière à tourner par rapport à celui-ci autour d'un axe vertical fixe et avec une partie excentrique (31b; 41b) agissant sur l'élément de support de matrice femelle (25).

6. Groupe de matrice selon l'une des revendications précédentes, dans lequel la première extension radiale (26) comprend un trou rectangulaire (26a) traversant dans la direction verticale; dans lequel le premier mécanisme de transmission comprend un bloc de revêtement parallélépipédique (32) logé à l'intérieur du trou rectangulaire (26a) de la première extension radiale (26) de la plaque de support de matrice (25) de manière à être fixé dans la direction du côté court du trou rectangulaire (26a), mais libre de coulisser à l'intérieur du trou rectangulaire (26a) dans la direction du côté long du trou rectangulaire (26a) entre deux positions de fin de course opposées; et dans lequel une broche excentrique (31b) du premier élément de sortie (31) est logée à l'intérieur d'un trou traversant vertical du bloc de revêtement parallélépipédique (32).

7. Groupe de matrice selon la revendication 5 ou 6, dans lequel le second mécanisme de transmission comprend une liaison (43) comprenant une tête de liaison avec un trou circulaire d'axe vertical (43a) à l'intérieur duquel tourne une broche excentrique (41b) du second élément de sortie (41).

8. Groupe de matrice selon la revendication 7, dans lequel la liaison (43) a un pied (43b) et la seconde extension radiale (27) de la plaque de support de matrice (25) est fixée au pied (43b) de la liaison au moyen d'une broche (42) avec un axe vertical (z42) de telle sorte que la plaque de support de matrice (25) est forcée à tourner autour de l'axe vertical (z42) de la broche (42); et dans lequel la broche (42) est couplée au corps de boîtier (10) de manière à être contrainte de coulisser linéairement, de préférence dans la direction transversale (Y-Y), par rapport au corps de boîtier (10) entre deux positions de fin de course, lorsque le second élément de sortie est entraîné en rotation.

9. Groupe de matrice selon l'une des revendications précédentes, dans lequel le corps de boîtier (10) comprend une plaque supérieure, une plaque inférieure (15) et des parois périphériques verticales, qui sont jointes ensemble de manière à définir un volume interne pour loger l'élément de support de matrice femelle (25); et dans lequel la plaque inférieure (15) a un trou traversant (15a) avec un axe vertical ayant des dimensions de manière à permettre l'insertion coaxiale de la matrice femelle (20) avec la possibilité de mouvement dans un plan longitudinal/transversal.

10. Groupe de matrice selon l'une des revendications précédentes, dans lequel un siège annulaire encastré (15b) est formé sur la surface supérieure de la plaque inférieure (15), ledit siège annulaire entourant le trou traversant (15a) et logeant une bague de friction coulissante (16) qui facilite le mouvement coulissant de l'élément de support de matrice femelle (25) dans le plan longitudinal/transversal par rapport au corps de boîtier.

11. Groupe de matrice selon l'une des revendications précédentes, dans lequel le corps de boîtier (10) comprend un bloc supérieur (18) pour l'accouplement avec la tête de formage, qui est solidaire de la plaque supérieure; ledit trou traversant supérieur (11a, 18a) s'étendant à travers le bloc supérieur (18) et la plaque supérieure du corps de boîtier afin de recevoir un élément mâle (53) à insérer à l'intérieur de la matrice femelle et pour définir ledit axe de référence vertical (zr).

12. Tête de formage pour former une paraison tubulaire en matière plastique pour une machine de moulage par soufflage, comprenant :
- un support (211), fixé pendant l'utilisation dans la direction verticale (Z-Z);
- un groupe d'alimentation (200) pour fournir la matière plastique, relié de manière rigide au support (211) et comprenant un conduit de distribution (52a) avec un axe vertical (z2);
- un groupe de matrice selon l'une des revendications précédentes, dans lequel le corps de boîtier (10) est couplé au groupe d'alimentation (200) de sorte que l'axe de référence vertical (zr) du trou traversant supérieur (18a, 11a) soit coaxial avec l'axe vertical (z2) du conduit de distribution (52a);
- un élément mâle (53), couplé coaxialement au conduit de distribution et inséré à l'intérieur du trou traversant supérieur (18a, 11a) et à l'intérieur de la matrice femelle de manière à définir avec celui-ci une embouchure (21) pour distribuer la paraison;
- un actionneur électrique (400) conçu pour ajuster l'épaisseur de la paraison distribuée par la tête de formage (10), monté sur le support (211) et conçu pour actionner de manière déplaçable dans la direction verticale (Z-Z) l'un de l'élément mâle (53) et du corps de boîtier du groupe de matrice (20) de manière à faire varier la position relative dans la direction verticale (Z-Z) de l'élément mâle (53) et de la matrice femelle (20) afin d'ajuster l'ouverture de l'embouchure de distribution.

13. Tête de formage selon la revendication précédente, dans laquelle l'élément mâle (53) est fixé au groupe d'alimentation (200) et le groupe de matrice (1) est mobile dans la direction verticale par rapport à la chambre de distribution (51) et à l'élément mâle (53) entre une position de fin de course supérieure correspondant à une configuration d'ouverture minimale de l'embouchure de distribution et une position de fin de course inférieure, correspondant à une configuration d'ouverture maximale (Δz) de l'embouchure de distribution (21).

14. Tête de formage selon la revendication 12 ou 13, dans laquelle l'actionneur électrique (400) pour régler l'épaisseur de la paraison est relié au moyen d'une chaîne de transmission (430, 410) au corps de boîtier (10) du groupe de matrice (1) ou à l'élément mâle (53), ladite chaîne de transmission étant configurée pour transformer un mouvement de rotation d'un arbre de l'actionneur (400) en un déplacement dans la direction verticale (Z-Z) du corps de boîtier (10) et donc de la matrice femelle (20) ou de l'élément mâle (53) par rapport au support (211).
